# EUROPÄISCHE PATENTSCHRIFT

(11) **EP 2 050 281 B1**
(45) Veröffentlichungstag und Bekanntmachung des Hinweises auf die Patenterteilung: **12.09.2012**
(21) Anmeldenummer: 07786973.3
(22) Anmeldetag: 02.07.2007
(51) Int. Cl.: H04N 13/02, G03B 35/08, G01B 11/275, G01C 11/02, G03B 17/56, G01B 5/00, H04N 5/225

(54) **OPTISCHE MESSEINRICHTUNG MIT ZWEI KAMERAEINHEITEN**
OPTICAL MEASUREMENT DEVICE WITH TWO CAMERA UNITS
DISPOSITIF DE MESURE OPTIQUE DOTÉ DE DEUX UNITÉS DE CAMÉRA

(30) Priorität: 26.07.2006 DE 102006035232
(43) Veröffentlichungstag der Anmeldung: 22.04.2009
(73) Patentinhaber: Robert Bosch GmbH, 70442 Stuttgart (DE)
(72) Erfinder: UFFENKAMP, Volker, 71638 Ludwigsburg (DE); NOBIS, Guenter, 72622 Nuertingen (DE)
(86) Internationale Anmeldenummer: PCT/EP2007/056618
(87) Internationale Veröffentlichungsnummer: WO 2008/012173

(56) Entgegenhaltungen:
- WO-A-03/005455
- WO-A-2006/052024
- DE-C1- 4 212 426
- FR-A1- 2 699 296
- JP-A- 2003 084 357
- US-A- 4 431 290
- US-A1- 2004 139 620

## Beschreibung

### Stand der Technik

Die Erfindung bezieht sich auf eine optische Messeinrichtung mit einer Bildaufnahmeeinheit, die mindestens zwei einander unter örtlicher Anordnung und Ausrichtung an einer Haltekonstruktion zugeordnete Kameraeinheiten aufweist.

Eine derartige optische Messeinrichtung kann für verschiedene Messaufgaben eingesetzt werden, beispielsweise für die Fahrwerksvermessung von Kraftfahrzeugen, wie in der DE 197 57 763 A1 und der DE 197 57 760 A1 in Verbindung mit der dreidimensionalen Bildmesstechnik (3D-Bildmesstechnik) angegeben.

In der 3D-Bildmesstechnik werden üblicherweise Bildmesseinheiten eingesetzt, die Bildaufnahmeeinheiten mit zwei oder mehr Kameras aufweisen. Für eine präzise 3D-Messung ist es erforderlich, die gegenseitige Zuordnung der Kameras über eine Kalibrierprozedur zu ermitteln und dem Messsystem bei jeder Messung bereitzustellen. Im praktischen Einsatz ist es für die Genauigkeit der 3D-Messung von entscheidender Bedeutung, dass die gegenseitige Zuordnung der Kameras sowohl bei wechselnden Temperaturen als auch bei mechanischen Belastungen über einen möglichst langen Zeitraum stabil bleibt. Bei der konstruktiven Ausführung der Bildmesseinheiten ist es durchaus üblich, komplette Kameras an einer tragenden Konstruktion, z.B. einem speziellen Tragrohr, mit stabilen, spielfreien, lösbaren Verbindungen zu befestigen. Es sind auch andere konstruktive Lösungen (ohne vorhandenen druckschriftlichen Nachweis) bekannt, bei denen die Hauptbestandteile einer Kamera ohne das die komplette Kamera umschließende Gehäuse an der tragenden Konstruktion befestigt werden. So sind die Kamerachips, die sensornahe Elektronik und das zugehörige Kamera-Objektiv in einem speziellen Montageteil befestigt. Diese Montageteile werden dann an der tragenden Konstruktion befestigt, wobei die tragende Konstruktion wiederum aus mehreren Bauteilen zusammengebaut ist. Solche Konstruktionen sind im Aufbau aufwändig, teuer und nicht ausreichend langzeitstabil und erfordern über eine mittlere Nutzungsdauer eine erneute Kalibrierung im Feld. Wenn die erforderliche Kalibrierporzedur nur durch einen Fachmann (z.B. Kundendienst) durchgeführt werden kann, mindert das in vielen Fällen die Akzeptanz der 3D-Bildmesstechnik erheblich und verursacht zusätzliche Betriebskosten.

Der Erfindung liegt die Aufgabe zugrunde, eine optische Messeinrichtung der eingangs genannten Art bereit zu stellen, die einen robusten, langzeitstabilen Aufbau mit einfacher, präziser Montage ergibt und dabei kostengünstig ist.

Diese Aufgabe wird mit den Merkmalen des Anspruches 1 gelöst. Hierbei ist vorgesehen, dass die Haltekonstruktion einen einstückigen Tragekörper mit daran ausgeformten Montagestrukturen aufweist, in denen die Hauptbestandteile einer Kamera und eine Beleuchtungseinheit aufgenommen sind. Im Weiteren werden die Hauptbestandteile einer Kamera: Kamerachip, sensornahe Elektronik und optische Vorsatzelemente, als Kameraeinheit bezeichnet.

Der einstückige Tragekörper mit den Montagestrukturen ergibt eine eindeutige Zuordnung der Kameraeinheiten zueinander und einen robusten Aufbau mit hoher mechanischer und thermischer Stabilität.

Dabei werden die Montage und eindeutige Zuordnung der Kameraeinheiten dadurch begünstigt, dass die Montagestrukturen alle in gleicher Weise zur Aufnahme gleicher Kameraeinheiten ausgebildet sind.

Eine für die Anordnung in einer Messeinrichtung vorteilhafte, erfindungsgemäße Ausgestaltung besteht darin, dass der Tragekörper einen längserstreckten Profilabschnitt aufweist, der aus Metall oder Kunststoff besteht.

Zu einem stabilen Aufbau tragen die Maßnahmen bei, dass der Profilabschnitt mit längsverlaufenden oder längs- und querverlaufenden Verstärkungsrippen versehen ist.

Ein einfacher Aufbau und eine einfache Montage werden ferner dadurch begünstigt, dass beidseitig an den längserstreckten Profilabschnitt ein erweiterter Endabschnitt angeformt ist, in dem die Montagestruktur ausgebildet ist.

Weitere vorteilhafte Maßnahmen insbesondere für eine Stereomessung bestehen darin, dass die Montagestrukturen in der Weise ausgebildet und orientiert sind, dass die optischen Achsen der mindestens zwei darin aufgenommenen Kameraeinheiten in dem davor liegenden Raum gegeneinander gerichtet sind und sich in einem Punkt schneiden.

Eine für die l lerstellung und Montage vorteilhafte Ausgestaltung besteht darin, dass die beidseitigen Endabschnitte bezüglich des in sich gerade ausgebildeten längserstreckten Profilabschnitts in stumpfem Winkel gegeneinander eingebogen sind.

Zu einer einfachen Montage und einem robusten Aufbau tragen ferner die Maßnahmen bei, dass die Montagestrukturen zumindest zum Teil als Vertiefungen in den Tragekörper eingeformt sind und dass in die jeweilige Vertiefung ein Kamerachip und optische Vorsatzelemente eingesetzt sind.

Die Funktionsweise der Messeinrichtung bei präzisem Aufbau wird dadurch begünstigt, dass die Montagestrukturen für die Kamerachips und die optischen Vorsatzelemente in einer Maschinenaufspannung hergestellt werden, wodurch eine hohe Präzision erreicht wird.

Zu vorteilhaften, kompakten Aufbau tragen des Weiteren die Maßnahmen bei, dass in den Montagestrukturen auch Beleuchtungseinheiten aufgenommen sind und an dem Tragekörper auf der von den Kameraeinheiten angewandten Rückseite der Montagestrukturen eine jeweilige Sensorelektronik angeordnet ist.

Die besonderen Vorteile kommen beispielsweise bei Anwendung der optischen Messeinrichtung nach einem der vorhergehenden Ansprüche bei einem Prüfstand zur optischen Fahrwerkvermessung von Kraftfahrzeugen zum Tragen.

### Kurze Beschreibung der Zeichnungen

Die Erfindung wird nachfolgend anhand von Ausführungsbeispielen unter Bezugnahme auf die Zeichnungen näher erläutert. Es zeigen:
- Fig. 1: eine schematische Darstellung einer Bildmesseinheit einer optischen Messeinrichtung,
- Fig. 2: einen in der Bildmesseinheit einzusetzenden Tragekörper für Kameraeinheiten in perspektivischer Ansicht,
- Fig. 3: einen Endabschnitt des Tragekörpers nach Fig. 2 mit darin zu montierenden Elementen einer Bildaufnahmeeinheit in perspektivischer Ansicht und
- Fig. 4: einen Endabschnitt des Tragekörpers nach Fig. 2 in vergrößerter perspektivischer Ansicht.

### Ausführungsform der Erfindung

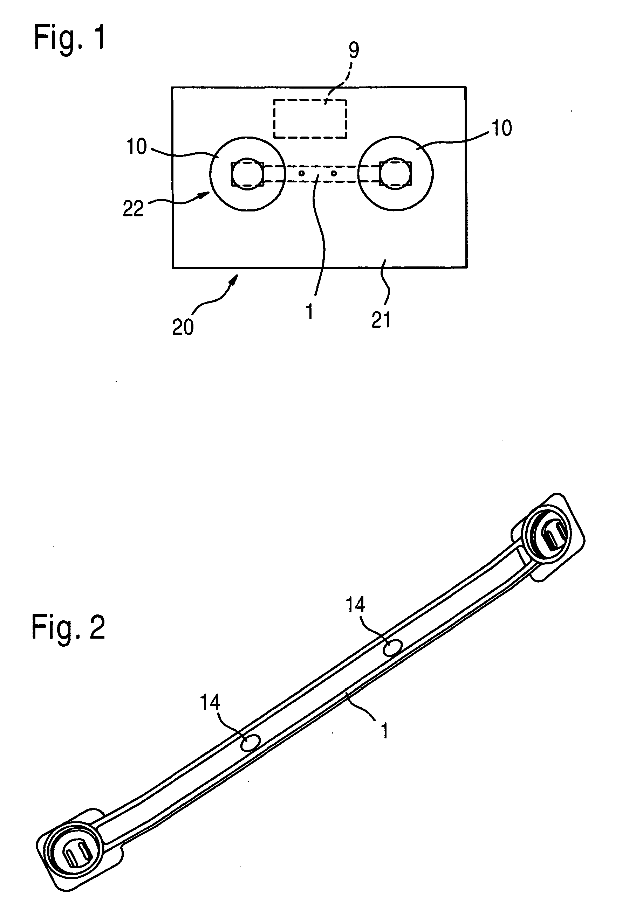

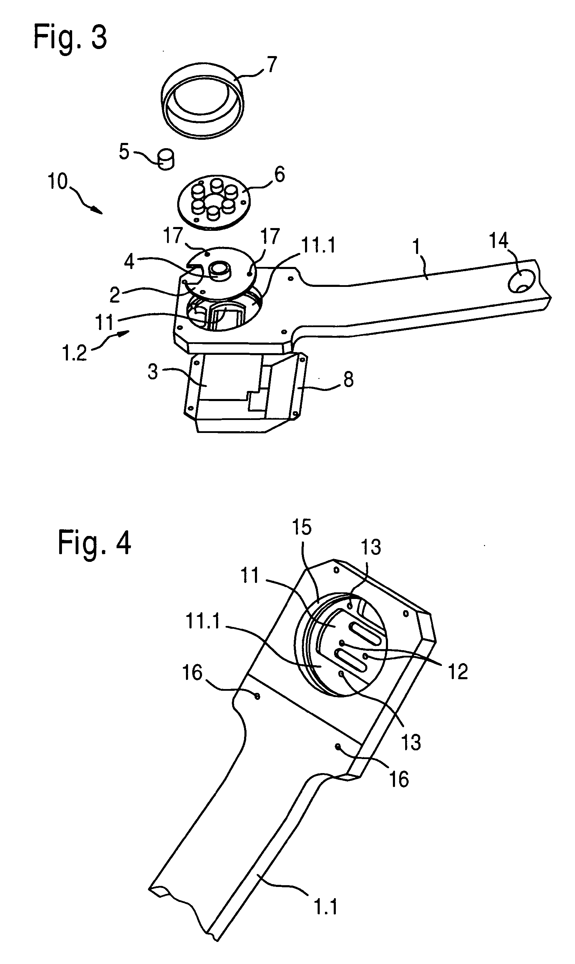

Fig. 1 zeigt eine Bildmesseinheit 20, bei der in einem Gehäuse 21 im Bereich von optischen Gehäuseöffnungen 22 vorliegend zwei Kameraeinheiten 10 angeordnet sind, welche an einem in dem Gehäuse angebrachten Tragekörper 1 aufgenommen sind. In dem Gehäuse 21 ist auch eine elektrische Schaltungseinheit 9 für den Betrieb der beiden Kameraeinheiten 10 und der Beleuchtungsvorrichtung, z.B. mit Beleuchtungseinheiten 6 nach Fig. 3, angeordnet.

Wie Fig. 2 zeigt, ist der Tragekörper 1 einstückig ausgebildet und besteht in seinem mittleren Abschnitt aus einem längserstreckten Profilabschnitt 1.1, der mit Längsrippen verstärkt ist und z.B. U-förmigen oder doppel-T-förmigen Querschnitt besitzt. Der Profilabschnitt 1.1, der sich beispielsweise gerade erstreckt, weist zu seiner Befestigung in dem Gehäuse 21 oder einer ähnlichen Tragekonstruktion Befestigungselemente 14, etwa Durchgangsbohrungen oder Zapfen oder dgl., auf und geht an seinen Enden einstückig in stumpfwinklig, unter gleichem Winkel abgebogene Endbereiche über, die sich zu Endabschnitten 1.2 erweitern. In den erweiterten Endabschnitten 1.2 sind Montagestrukturen für die Elemente der Kameraeinheiten 10 und Beleuchtungseinheiten 6 und gegebenenfalls weitere Komponenten ausgebildet. Dabei können die Montagestrukturen auf beiden Seiten des erweiterten Endabschnittes 1.2 und evtl. auch in Nachbarbereichen desselben angeordnet sein, beispielsweise für die optischen Elemente mit ihren gegebenenfalls vorhandenen Trageelementen auf der einen Seite und für elektronische Elemente und deren Träger auf der anderen Seite. Dadurch wird ein kompakter Aufbau der optisch, mechanisch und elektronisch zusammenwirkenden Komponenten der jeweiligen Kameraeinheit 10 und der ihr zugeordneten elektronischen Elemente bei einfacher, definierter Montage und genauer Positionierung und Zuordnung zueinander erreicht.

Bei dem in Fig. 3 gezeigten Ausführungsbeispiel für die in dem erweiterten Endabschnitt 1.2 des Trägers 1 einzusetzenden Komponenten der Kameraeinheit 10 und Beleuchtungseinheit 6 einerseits und einer ihr zugeordneten Sensorelektronik 3 andererseits sind auf der Montagestruktur aufeinander folgend auf einer Montagefläche 11 ein Kamerachip 2 und auf einer dazu parallelen Montagefläche 11.1 ein in einem Objektivhalter 4 eingesetztes Objektiv 5, eine Beleuchtungseinheit 6 mit ringförmig auf einem Träger um das Objektiv 5 angeordneten Leuchtdioden und ein Schutzglas 7 zumindest teilweise in einer Vertiefung des erweiterten Endabschnittes 1.2 einzusetzen, wobei geeignete Halteelemente bzw. Befestigungselemente etwa mit Befestigungslöchern 17 verwendet werden, soweit erforderlich. Auf der von der Kameraeinheit 10 abgewandten Seite des Endabschnittes 1.2 ist gegenüber dem Kamerachip 2 und eng benachbart die Sensorelektronik 3 angebracht, die mittels einer Abdeckkappe 8 abgedeckt wird. Des Weiteren sind, wie insbesondere auch aus Fig. 4 ersichtlich, in der Tragestruktur Aufnahmeelemente 12 und Montageelemente 13, wie weitere Montagefläche, Bohrungen, Vorsprünge und/oder Durchbrüche, vorhanden. Die Kontaktierung des Kamerachips 2 mit der Sensorelektronik 3 erfolgt bei dem gezeigten Ausführungsbeispiel über Durchbrüche, durch die die Anschlusselemente geführt werden. Zum Anbringen der Abdeckkappe 8 sind an dem erweiterten Endabschnitt 1.2 weitere Befestigungselemente 16 in Form von Bohrungen oder Zapfen vorhanden. Zum Befestigen des Schutzglases 7 bzw. von gegebenenfalls zu verwendenden optischen Filtern sind am Umfangsrand der Vertiefung der Tragestruktur weitere Befestigungselemente, beispielsweise ein Gewinde zum Eindrehen eines Gegengewindes oder Vertiefungen oder Vorsprünge zum Einschnappen bzw. Einrasten von Gegenelementen angeordnet.

Der Tragekörper 1 in Form eines einstückigen Trägers besteht aus einem torsions- und biegesteifen und auch gegen Temperatureinflüsse formstabilen Profil, das vorteilhafterweise bereits beim Urformen eines Rohlings hergestellt werden kann. Die Montageflächen 11 sind in den Endabschnitten 1.2 unter definiertem Winkel für die Kamerachips 2 und die Objektivhaltenung 4 vorgesehen, die in einer Aufspannung mechanisch bearbeitet werden. Damit wird die gegenseitige Zuordnung der Kameraeinheiten 10 mechanisch festgelegt, wobei deren optische Achsen vorzugsweise gegeneinander gerichtet sind und sich in einem Punkt in dem Raum vor den Kameraeinheiten 10 bzw. der Messeinheit 20 schneiden. Auf diese Weise wird mit dem Tragekörper 1 und den Kameraeinheiten 10 ein Stereomessbalken gebildet. An der Montagefläche 11 für den Kamerachip 2 sind Positionierhilfen für ein präzises und zugleich einfaches Anbringen, beispielweise Verkleben der Kamerachips 2 an dem Tragekörper 1 vorhanden. Diese Positionierhilfen können z.B. als Anlageflächen für den Kamerachip 2 oder als Positionierpins (etwa wie im Prozess der Chipherstellung) ausgeführt sein. Die Haltekonstruktion mit dem Tragekörper 1 ist dabei vorteilhaft so ausgeführt, dass die Sensorelektronik 3 mit einer kleinen Elektronikplatine auf der Rückseite der Montagefläche 11 des Kamerachips 2 im Zuge der Montage an der betreffenden Montagestruktur des Endabschnittes 1.2 verklebt wird. Damit wird ein rückseitiger Staub- und Feuchtigkeitsschutz für den Kamerachip 2 und das Objektiv 5 erreicht. Erst nachdem der Kamerachip 2 und die Sensorelektronik 3 an dem Tragekörper 1 montiert sind, wird der Kamerachip 2 mit der Sensorelektronik 3 verlötet.

Parallel zu der Montagefläche 11 für den Kamerachip 2 ist eine weitere Montagefläche 11.1 für den Objektivhalter 4 vorgesehen. Die betreffende Montagefläche und der Objektivhalter 4 weisen zur einfachen und trotzdem präzisen Ausrichtung des Objektivs 5 zum Hauptpunkt des Kamerachips 2 einen kreisförmigen Bund auf. Dieser Bund kann sich entweder über den gesamten Kreisumfang oder nur einzelne Kreissegmente erstrecken. Die Montage des Objektivhalter 4 erfolgt durch Verschrauben gegenüber der betreffenden Montagefläche, wobei eine Zentrierung durch den genannten Bund erfolgt. Zur Vereinfachung der Feinbearbeitung kann die Montagefläche als Dreipunktauflage für den Objektivhalter 4 ausgeführt sein. Alle für die präzise Zuordnung der beiden Kamerachips 2 und der zugehörigen Objektive 5 relevanten Bearbeitungsschritte werden vorzugsweise in einer einzigen Aufspannung des Tragekörpers 1 bzw. Stereomessbalkens durchgeführt.

Des Weiteren sind im Montagebereich des Objektivhalters 4 zusätzlich Montageelemente für die Beleuchtungseinheit 6 mit der ringförmigen LED-Beleuchtung vorgesehen. Die Beleuchtungseinheit 6 besteht aus mehreren auf einer Leiterplatte verlöteten Leuchtdioden und ist konstruktiv so ausgeführt, dass die Leuchtdioden konzentrisch um das Objektiv 5 angeordnet sind. Zur Montage des Verbindungskabels zwischen der Beleuchtungseinheit 6 und der Leiterplatte der elektrischen Schaltungseinheit 9 ist in dem Tragekörper 1 und dem Objektivhalter 4 ein entsprechender Durchbruch vorgesehen. Alternativ können die Befestigungselemente 17 für die Beleuchtungseinheiten 6 auch im Objektivhalter 4 vorgesehen werden.

Des Weiteren ist konzentrisch zu dem Objektivhalter 4 ein Befestigungsgewinde für ein optisches Filter oder eine Schutzscheibe 7 zum gleichzeitigen Schutz für das Objektiv 5 und die Beleuchtungseinheit 6 vorgesehen. Dieses Gewinde ist so ausgeführt, dass für Standardobjektive handelsübliche Schutzgläser 7 bzw. Filter verwendet werden können. Damit ist auf einfache Weise ein Staub- und Feuchtigkeitsschutz für das Objektiv 5, die Beleuchtungseinheit 6 und den Kamerachip 2 hergestellt.

Der Tragekörper 1 weist in seinem mittleren Bereich ein Fest- und ein Loslager auf, die für die Montage im Gehäuse 21 der Bildmesseinheit 20 vorgesehen sind.

Das Objektiv 5 wird im Objektivhalter 4 über ein zentrisch angeordnetes Gewinde montiert. Damit ist eine Feinjustage des Objektivs gegenüber dem Kamerachip 2 zur Gewährleistung einer scharfen Abbildung nach der Montage des Objektivhalters 4 gegeben. Nach der Feinjustage wird das Objektiv 5 mit dem Objektivhalter 4 verklebt oder mechanisch arretiert.

Das Gehäuse 21 der Bildmesseinheit 20 ist konstruktiv sehr einfach gehalten. Es weist die Gegenstücke für das Los- und Festlager des Tragekörpers 1, eine Aufnahme für die Leiterplatte und den Steckverbinder der Bildmesseinheit 20, montierbare Gehäuseteile zur frontseitigen Abdeckung der Bildmesseinheit 20 sowie Befestigungselemente für die komplette Bildmesseinheit 20 auf.

## Patentansprüche

1. Optische Messeinrichtung mit einer Bildaufnahmeeinheit, die mindestens zwei einander unter örtlicher Anordnung und Ausrichtung an einer Haltekonstruktion zugeordnete Kameraeinheiten (10) aufweist, wobei
die Haltekonstruktion einen einstückigen Tragekörper (1) mit einem längserstreckten Profilabschnitt (1.1) aufweist und beidseitig an den längserstreckten Profilabschnitt (1.1) ein erweiterter Endabschnitt (1.2) angeformt ist, in dem die Montagestrukturen als Vertiefung in den Tragekörper (1) eingeformt sind,
**dadurch gekennzeichnet,**
**dass** in die jeweilige Vertiefung aufeinander folgend auf einer Tragefläche (11) ein Kamerachip (2) und auf einer dazu parallelen Montagefläche (11.1) ein in einem Objektivhalter (4) eingesetztes Objektiv (5), eine Beleuchtungseinheit (6) und ein Schutzglas (7) eingesetzt sind.

2. Messeinrichtung nach Anspruch 1,
**dadurch gekennzeichnet,**
**dass** die Montagestrukturen alle in gleicher Weise zur Aufnahme gleicher Kameraeinheiten (10) ausgebildet sind.

3. Messeinrichtung nach Anspruch 1,
**dadurch gekennzeichnet,**
**dass** der Profilabschnitt mit längsverlaufenden Verstärkungsrippen versehen ist.

4. Messeinrichtung nach einem der vorhergehenden Ansprüche,
**dadurch gekennzeichnet,**
**dass** die Montagestrukturen in der Weise ausgebildet und orientiert sind,
**dass** die optischen Achsen der mindestens zwei darin aufgenommenen Kameraeinheiten (10) in dem davor liegenden Raum gegeneinander gerichtet sind und sich in einem Punkt schneiden.

5. Messeinrichtung nach Anspruch 4,
**dadurch gekennzeichnet,**
**dass** die beidseitigen Endabschnitte (1.2) bezüglich des in sich gerade ausgebildeten längserstreckten Profilabschnitts (1.1) in stumpfem Winkel gegeneinander eingebogen sind.

6. Messeinrichtung nach einem der vorhergehenden Ansprüche,
**dadurch gekennzeichnet,**
**dass** an dem Tragekörper (1) auf der von den Kameraeinheiten (10) abgewandten Rückseite der Montagestrukturen eine jeweilige Sensorelektronik (3) angeordnet ist.

7. Anwendung der optischen Messeinrichtung nach einem der vorhergehenden Ansprüche bei einem Prüfstand zur optischen Fahrwerkvermessung von Kraftfahrzeugen.

## Claims

1. Optical measurement device with an image recording unit, having at least two camera units (10) which are assigned to each other with spatial arrangement and alignment on a holding construction, wherein
the holding construction has a unipartite support body (1) with a longitudinally extending profile section (1.1) and an extended end section (1.2) is moulded on both sides on the longitudinally extending profile section (1.1), in which end section the mounting structures are formed into the support body (1) as a recess,
**characterized in that**
a camera chip (2) on a support surface (11) and, on a mounting surface (11.1) which is parallel thereto, an objective (5), which is inserted in an objective holder (4), an illumination unit (6) and a protective glass (7) are placed one following the other into the respective recess.

2. Measurement device according to Claim 1,
**characterized in that**
the mounting structures are all configured identically for receiving identical camera units (10).

3. Measurement device according to Claim 1,
**characterized in that**
the profile section is provided with longitudinally running reinforcing ribs.

4. Measurement device according to one of the preceding claims,
**characterized in that**
the mounting structures are configured and oriented such that the optical axes of the at least two camera units (10) received therein point towards one another and intersect in a point in the space located in front of them.

5. Measurement device according to Claim 4,
**characterized in that**
the end sections (1.2) on both sides are bent towards each other at an obtuse angle with respect to the longitudinally extending profile section (1.1) which is configured to be inherently straight.

6. Measurement device according to one of the preceding claims,
**characterized in that**
a respective sensor electronics system (3) is arranged on the support body (1) on the rear side of the mounting structures which is facing away from the camera units (10).

7. Use of the optical measurement device according to one of the preceding claims at a test bench for optical chassis measurement of motor vehicles.

## Revendications

1. Dispositif de mesure optique doté d'une unité d'enregistrement d'image qui présente au moins deux unités de caméra (10) associées l'une à l'autre sur une structure de maintien dans un agencement local et une orientation locale,
la structure de maintien présentant un corps de support (1) d'une seule pièce présentant une partie (1.1) à profil allongé et des deux côtés de la partie (1.1) à profil allongé une partie d'extrémité évasée (1.2) dans laquelle les structures de montage sont formées sous la forme de creux ménagés dans le corps de support (1),
**caractérisé en ce que**
une puce de caméra (2) est insérée dans chaque creux successif sur une surface de support (11) et
**en ce qu'**un objectif (5) inséré dans un porte-objectif (4), une unité d'éclairage (6) et un verre de protection (7) sont insérés sur une surface de montage (11.1) parallèle à la surface de support.

2. Dispositif de mesure selon la revendication 1, **caractérisé en ce que** les structures de montage sont toutes configurées de la même manière pour reprendre des unités de caméra (10) identiques.

3. Dispositif de mesure selon la revendication 1, **caractérisé en ce que** la partie profilée est dotée de nervures longitudinales de renfort.

4. Dispositif de mesure selon l'une des revendications précédentes, **caractérisé en ce que** les structures de montage sont configurées et orientées de telle sorte que les axes optiques des deux ou plus de deux unités de caméra (10) qui y sont logées soient orientés l'un vers l'autre dans l'espace situé en avant et se coupent en un point.

5. Dispositif de mesure selon la revendication 4, **caractérisé en ce que** les parties d'extrémité (1.2) de chaque côté sont cintrées l'une vers l'autre sous un angle obtus par rapport à la partie allongée (1.1) du profil, intrinsèquement rectiligne.

6. Dispositif de mesure selon l'une des revendications précédentes, **caractérisé en ce qu'**une électronique de détection (3) respective est disposée sur le corps de support (1) sur le côté dorsal, non tourné vers les unités de caméra (10), des structures de montage.

7. Utilisation du dispositif de mesure optique selon l'une des revendications précédentes dans un banc d'essai de mesure optique de châssis de véhicules automobiles.
